# EUROPÄISCHE PATENTSCHRIFT

(11) **EP 1 391 696 B1**
(45) Veröffentlichungstag und Bekanntmachung des Hinweises auf die Patenterteilung: **02.08.2006**
(21) Anmeldenummer: 03017708.3
(22) Anmeldetag: 02.08.2003
(51) Int. Cl.: G01D 5/04, G01D 5/16, G01D 5/14

(54) **Multiturn-Winkelmessgerät**
Multiturn angle measuring device
Appareil de mesure d'angle multitour

(30) Priorität: 19.08.2002 DE 10238640
(43) Veröffentlichungstag der Anmeldung: 25.02.2004
(73) Patentinhaber: SICK STEGMANN GmbH, 78166 Donaueschingen (DE)
(72) Erfinder: Stobbe, Willibald, 78166 Donaueschingen (DE)
(74) Vertreter: Ludewigt, Christoph

(56) Entgegenhaltungen:
- DE-A- 10 060 574
- PATENT ABSTRACTS OF JAPAN Bd. 2000, Nr. 01, 31. Januar 2000 (2000-01-31) & JP 11 287634 A (TOKAI RIKA CO LTD), 19. Oktober 1999 (1999-10-19)
- PATENT ABSTRACTS OF JAPAN Bd. 2002, Nr. 09, 4. September 2002 (2002-09-04) & JP 2002 131049 A (YAZAKI CORP), 9. Mai 2002 (2002-05-09)
- PATENT ABSTRACTS OF JAPAN Bd. 2002, Nr. 02, 2. April 2002 (2002-04-02) & JP 2001 289671 A (YASKAWA ELECTRIC CORP), 19. Oktober 2001 (2001-10-19)

## Beschreibung

Multiturn-Winkelmessgeräte sind elektromechanische Sensoren, welche mehrere Umdrehungen absolut detektieren, d.h. bereits nach dem Einschalten des Gerätes steht innerhalb der Auflösung über mehrere Umdrehungen stets eine eindeutige Winkelposition zur Verfügung. Winkelmessgeräte werden zur Messung von Wellen und Achsen, zur Positionierung und zur Regelung von Elektromotoren in der Industrie, insbesondere in Fertigungs- und Handhabungsmaschinen eingesetzt.

Vorzugsweise sind derartige Multiturn-Drehgeber kompakt aufgebaut und weisen eine hohe Anzahl an eindeutig detektierbaren Umdrehungen auf. In der DE 28 17 172 C2 etwa wird ein Drehgeber beschrieben, der einen kompakten Bauraum dadurch realisiert, dass die mittels eines Stimrad-Untersetzungsgetriebes angetriebenen Multiturn-Maßverkörperungen innerhalb des Umfangsbereiches der Single-Codescheibe liegen. Die Sensoren zur Detektion der Multiturn- und der Singleturn-Maßstäbe sind dabei auf unterschiedlichen Leiterplatten angeordnet.

In der DE 34 29 648 C2 ist ein Multiturn-Drehgeber beschrieben, welcher zur Abtastung einer optischen Single-Codescheibe und einer weiteren im Umfangsbereich der Single-Codescheibe liegenden weiteren optischen Multiturn-Codescheibe Detektoren verwendet, welche auf einer Leiterplatte angeordnet sind. Auch hier werden zur Untersetzung Stirnradgetriebe mit zur Eingangswelle parallelen Drehachsen verwendet.

Auch in der DE 100 60 574 A1 wird ein Multiturn-Drehgeber vorgestellt, welcher auf einer Leiterplatte angeordnete Detektoren für die Detektion der Single- und der Multiturn-Codeträger verwendet.

Bei dem in der DE 100 01 676 C1 beschriebenen Umdrehungszähler werden entlang des Umfangsbereiches einer Eingangswelle angeordnete Reed-Kontakte vermittels eines mit der Eingangswelle umlaufenden Magneten betätigt und erzeugen somit Zählimpulse. Derartige sogenannte zählende Multiturn-Drehgeber benötigen jedoch für die Zählung im stromlosen Zustand eine Batteriepufferung. Darüber hinaus unterliegen die Reed-Kontakte einem mechanischem Verschleiß und haben daher nur eine beschränkte Lebensdauer. Außerdem nimmt die Batterie Bauraum in Anspruch und kann daher bei Multitum-Drehgebem kleiner Bauart lediglich außerhalb des Sensor-Gehäuses platziert werden.

Die Untersetzungsgetriebe bisheriger mechanischer Multiturn-Drehgeber sind als Stirnradgetriebe mit zur Eingangswelle parallelen Zahnrad-Drehachsen ausgestaltet. Gerade bei einer Eingangswelle mit einem großen Durchmesser muss daher das abgreifende Zahnrad der ersten Multiturn-Stufe entweder einen noch größeren Durchmesser aufweisen, als das auf der Eingangswelle befestigte, um eine Untersetzung zu erwirken. Hierfür wird jedoch ein deutlich größerer Bauraum benötigt. Findet andernfalls eine Übersetzung statt, so hat dies jedoch noch höhere Drehzahlen der ersten Zahnrad-Stufe als der Eingangswelle zur Folge. Gerade hohe Drehzahlen der Eingangswelle führen somit zu einem erhöhten Zahnrad-Verschleiß und somit zu einer verminderten Lebensdauer des Multiturn-Winkelmessgerätes.

Der angegebenen Erfindung liegt die Aufgabe zugrunde, einen Multiturn-Drehgeber zu entwickeln, der bei kompaktem Aufbau und mit vergleichsweise wenigen Multiturn-Stufen eine hohe Anzahl von Umdrehungen auch bei hohen Drehzahlen und/oder großen Durchmessern der Eingangswelle zu messen imstande ist.

Diese Aufgabe wird gelöst durch einen Gegenstand mit den Merkmalen des Patentanspruchs 1.

Das erfindungsgemäße Multiturn-Winkelmessgerät weist eine erste Maßverkörperung, welche mit der Eingangswelle verdrehfest verbunden ist, auf und die mittels einer ersten Abtasteinheit zur Bestimmung der Winkellage der Eingangswelle abgetastet wird. Weitere Maßverkörperungen dienen zur Messung der Anzahl der Umdrehungen der Eingangswelle, wobei jede Maßverkörperung mittels eines Untersetzungsgetriebes zur jeweils vorgeschalteten Maßverkörperung untersetzt wird und parallel zueinander angeordnet sind. Zur Abtastung jeder Maßverkörperung ist jeweils eine Abtasteinrichtung auf einer Leiterplatte angeordnet. Erfindungsgemäß weiser ein mit der Eingangswelle verbundene Eingangszahnrad sowie ein erstes Getriebezahnrad des Untersetzungsgetriebes nicht zueinander parallele Drehachsen auf und die Zahnflanken der Zähne des Eingangszahnrades und des Rades des Getriebezahnrades verlaufen nicht parallel zur Drehachse des jeweiligen Zahnrades. Weiter ist die Anzahl der Zähne des Eingangszahnrades kleiner als die Anzahl der Zähne des Rades des ersten Getriebezahnrades und die folgenden Getriebezahnräder sind wieder parallel zur Eingangswelle angeordnet. Der Trieb des ersten Getrieberades sowie das Rad des zweiten Getriebezahnrades sind Schraubräder.

Somit ist das erste Getriebezahnrad sowohl mit dem mit der Eingangswelle verbundenen Eingangszahnrad als auch mit dem zweiten Getriebezahnrad schrägverzahnt. Damit kann das erste Getriebezahnrad schräg zum Eingangszahnrad und schräg zu den restlichen Getriebezahnrädern, die wiederum parallel zur Eingangswelle angeordnet sind, angeordnet werden. Dadurch ist es möglich, selbst bei großen Eingangsdurchmessern, also beispielsweise bei Hohlwellen, eine ausreichende Untersetzung zu erreichen, wobei der Bauraum durch die Einfügung des in einem Winkel, z.B. 90°, anordenbaren ersten Getriebezahnrades klein bleibt. Hierdurch werden die vorgenannten Nachteile vermieden.

Die mit der Erfindung erzielten Vorteile liegen weiter insbesondere darin, dass bei sehr kompaktem Aufbau des Multiturn-Drehgebers aufgrund der starken Getriebeuntersetzung der ersten Getriebestufe auch hohe Drehzahlen, insbesondere von Eingangswellen mit großem Durchmesser, gemessen werden können. Bei dieser Anordnung können insbesondere die Abtasteinheiten zur Detektion der Maßverkörperungen der Single- sowie der Multitum-Stufen auf einer einzigen Leiterplatte angeordnet werden.

Vorteilhafte Ausgestaltungen der Erfindung sind in den abhängigen Patentansprüchen angegeben.

Vorteilhafterweise sind auch das mit der Eingangswelle verbundene Zahnrad und das Rad des ersten Getriebezahnrades Schraubräder.

Wenn die Abtasteinheit der ersten Maßverkörperung und die Abtasteinheiten der weiteren Maßverkörperungen auf einer einzigen Leiterplatte angeordnet sind, kann erheblich Bauraum gespart werden und der Drehgeber ist entsprechend kompakt.

In Weiterbildung der Erfindung werden die weiteren Maßverkörperungen von Zahnrädern, die parallel zur Eingangswelle verlaufende Drehachsen aufweisen, zentrisch getragen werden und zwischen denen weitere Zwischenzahnräder angeordnet sind. Die Zahnräder können auf einer einteiligen Multiturn-Einheit angeordnet sein.

In Weiterbildung der Erfindung sind die weiteren Maßverkörperungen diametral magnetisierte Permanentmagnete.

Vorteilhafterweise ist die erste Maßverkörperung eine transmissive Moire-Codescheibe, welche durch einen Sender beleuchtet wird und welche detektiert wird vermittels einer photoelektrischen Abtasteinheit.

Alternativ kann die erste Maßverkörperung aus einem oder mehreren Magneten bestehen, die sektoriell magnetisiert sind und von einem oder mehreren Magnetsensoren detektiert werden.

Ein Ausführungsbeispiel der Erfindung ist in den nachfolgend erläuterten Zeichnungen dargestellt. In der Zeichnung zeigen:
- **Fig. 1**: den schematischen Aufbau eines Multiturn-Drehgebers im Schnitt;
- **Fig. 2**: die Multiturn Getriebeeinheit aus verschiedenen Perspektiven;
- **Fig. 3**: schematisch die Gestaltung eines Zahnrades;
- **Fig. 4**: eine perspektivische Ansicht des Multiturn-Drehgebers in Explosionsdarstellung.

Das Multiturn-Winkelmessgerät 1 besteht aus wenigen modular aufgebauten Bestandteilen. Es besteht aus einem Gehäuse 3, einer Eingangswelle 2, einer mit dieser verbundenen Codescheibe 9, einer Multiturn-Getriebeeinheit 5 und einer Leiterplatte 6, auf welcher die Abtasteinheiten zur Detektion der Codescheibe 9 sowie der Multitum-Maßverkörperungen 11, 12, 13 angeordnet sind.

Zur Messung der Absolutposition der Eingangswelle 2 innerhalb einer Umdrehung wird die Codescheibe 9 mittels eines Lichtsenders 7 beleuchtet und von einer Abtasteinheit 10 detektiert. Der Lichtsender besteht vorzugsweise aus einer Leuchtdiode LED.

Die optische Codescheibe 9 trägt dabei einen absoluten binären Code, vorzugsweise etwa einen Graycode oder einen sequentiellen Code, der etwa durch Hell-/ Dunkelfenster realisiert ist. Die Codierung ist im Falle einer transmissiven Abtastung etwa durch eine dünne photolithographisch strukturierte Chromschicht auf einem Glasträger ausgestaltet. Zusätzlich kann eine inkrementale Codespur auf der Codescheibe 9 vorgesehen werden, die nach Möglichkeit aus einer hohen Anzahl an Teilungsperioden besteht, was eine hohe Winkelauflösung des Multitum-Winkelmessgerätes 1 zur Folge hat.

Die Eingangswelle 2 ist gegenüber dem Drehgeber-Gehäuse 3 vorzugsweise mittels Kugellager 4 drehbar gelagert und weist ein Eingangszahnrad 40 zum untersetzten Antrieb des ersten Zahnrades 41 der Multiturn-Getriebeeinheit 5 auf. Das Eingangszahnrad 40 hat notwendigerweise eine zur Eingangswelle 2 parallele Drehachse. Das erste Zahnrad 41 der Multiturn-Stufe 5 hat jedoch eine Drehachse, die nicht zur Drehachse des Eingangszahnrades 40 parallel verläuft. Vorzugsweise ist die erste Getriebestufe, bestehend aus dem mit der Eingangswelle 2 verbundenen Eingangszahnrad 40 und dem ersten Zahnrad der Multiturn-Stufe 5, ein Schraubradgetriebe mit um 90 Grad kreuzenden Drehachsen.

Ist die Anzahl der Zähne des Eingangszahnrades 40 größer als die Anzahl der Zähne des ersten Getriebezahnrades 41, so kommt es beim Antrieb des Eingangszahnrades 40 zu einer Untersetzung ins Langsame.

Das mit der Eingangswelle 2 verbundene Eingangszahnrad 40 sowie das erste Getriebezahnrad 41 weisen nicht zueinander parallele Drehachsen D₄₀ und D₄₁ auf. Die Zahnflanken der Zähne Z₄₀ des Zahnrades 40 und die Zahnflanken der Zähne Z₄₁ des Rades 411 des Zahnrades 41 verlaufen nicht parallel zur jeweiligen Drehachse D₄₀ bzw. D₄₁ des jeweiligen Zahnrades 40 bzw. 41. Die Anzahl der Zähne Z₄₀ des Eingangszahnrades 40 ist kleiner als die Anzahl der Zähne Z₄₁ des Rades 411 des ersten Getriebezahnrades 41 und die folgenden Getriebezahnräder sind wieder parallel zur Eingangswelle 2 angeordnet. Der Trieb 412 des ersten Getrieberades 41 sowie das Rad des zweiten Getriebezahnrades 31 sind als Schraubräder ausgebildet.

Somit ist das erste Getriebezahnrad 41 sowohl mit dem mit der Eingangswelle 2 verbundenen Eingangszahnrad 40 als auch mit dem zweiten Getriebezahnrad 31 schrägverzahnt. Damit kann das erste Getriebezahnrad 41 schräg zum Eingangszahnrad 40 und schräg zu den restlichen Getriebezahnrädern, die wiederum parallel zur Eingangswelle 2 angeordnet sind, angeordnet werden.

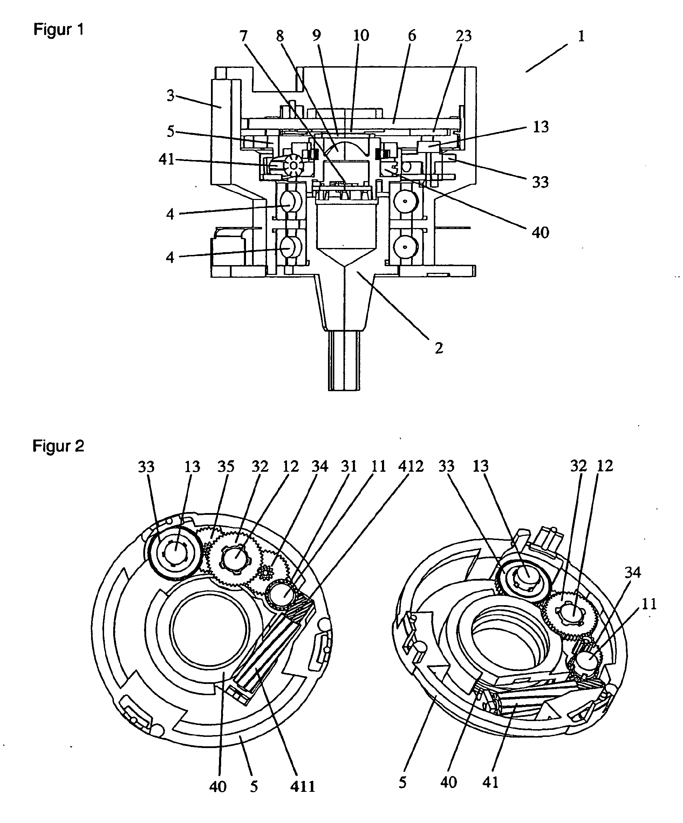

Die Multitum-Getriebeeinheit ist in der **Figur 2** aus zwei unterschiedlichen Ansichten dargestellt. Das erste Zahnrad 41 der Getriebeeinheit 5 treibt weitere untersetzte Zahnräder 31, 34, 32, 35, 33 an. Die Zahnräder 31, 32, 33 tragen die Positionscodierungen 11, 12, 13 zur Messung der Anzahl der Umdrehungen der Eingangswelle 2. Dabei ist jedes Codezahnrad 31, 32, 33 über ein Zwischenzahnrad 34, 35 zum jeweils vorangehenden Codezahnrad 31, 32, 33 untersetzt angetrieben. Abgesehen vom Eingangszahnrad 40 und vom letzten Zahnrad 33 der Getriebeeinheit 5 weist jedes Zahnrad in Richtung der Drehachse nebeneinanderliegend einen als Rad und einen als Trieb bezeichneten Teil auf. Beide Teile der Zahnräder weisen jeweils eine unterschiedliche Verzahnung auf. Dabei dient der als Rad bezeichnete Teil eines Zahnrades jeweils der Aufnahme der Drehbewegung vom Trieb des vorangehenden Zahnrades.

Zur Detektion der Positionscodierungen 11, 12, 13 sind Abtasteinheiten 21, 22, 23 vorgesehen, von denen die Abtasteinheiten 21, 22 in der Ansicht nicht dargestellt sind. Vorzugsweise sind die Zahnräder 31, 32, 33, welche die Codemagnete 11, 12, 13 tragen, Stirnradgetriebe mit zueinander parallelen Drehachsen, die vorzugsweise parallel zur Drehachse der Eingangswelle 2 verlaufen. Die Maßverkörperungen 11, 12, 13 sind sektorenförmig entlang ihres Umfanges abwechselnd magnetisierte, vorzugsweise diametral magnetisierte Permanentmagnete. Vorzugsweise sind die Magnete 11, 12, 13 von gleicher zylindrischer Geometrie und gleicher Magnetfeldstärke und liegen in einer gemeinsamen Ebene. Die Abtasteinheiten 21, 22, 23 liegen vorzugsweise gleichfalls in einer gemeinsamen Ebene und liegen jeweils den zu detektierenden magnetischen Maßverkörperungen 11, 12, 13 gegenüber.

Die Abtasteinheiten 10 zur Detektion der mit der Eingangswelle 2 verbundenen Codescheibe 9 und die Abtaster 21, 22, 23 zur Detektion der magnetischen Maßverkörperungen 11, 12, 13 sind Halbleiter-Bauelemente und auf der, der Codescheibe 9 zugewandten Seite der Leiterplatte 6, angeordnet.

Bei der in der Figur 2 dargestellten Multiturn-Getriebeeinheit 5 liegt die Drehachse des ersten Zahnrades 41 senkrecht zur Drehachse des mit der Eingangswelle 2 verbundenen Eingangszahnrades 40. Damit die Zahnräder 31, 32, 33, welche die Positionsmagnete 11, 12, 13 tragen, parallel zur Eingangswelle 2 verlaufende Drehachsen aufweisen, wird mittels eines weiteren Schraubradgetriebes, bestehend aus dem Trieb des Zahnrades 41 und dem Rad des Zahnrades 31, die Drehachse der Zahnräder 41, 31 nochmals um 90 Grad gedreht. Alle weiteren Zahnräder 34, 32, 35, 33 sind Stirnräder mit zur Drehachse der Eingangswelle 2 parallelen Drehachsen.

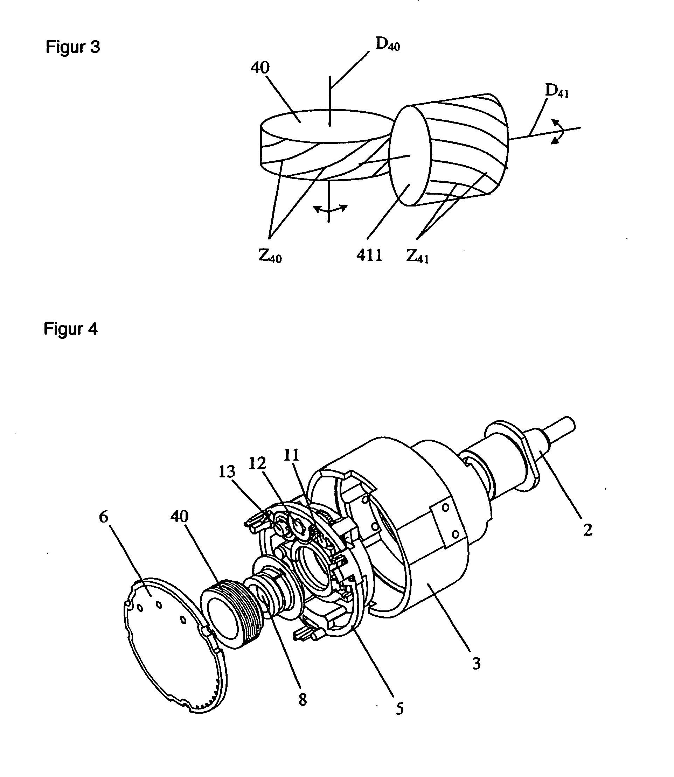

Bei dem in den **Figuren 1** und **4** dargestellten Multiturn-Drehgeber sind sämtliche Multiturn-Getriebe 31, 32, 33, 34, 35, 40, 41 inklusive der Maßverkörperungen 11, 12, 13 der Multiturn-Einheit 5 vollständig außerhalb des Umfangsbereiches der Maßverkörperung 9 für die Single-Stufe angeordnet.

Ferner liegen die Maßverkörperungen 9, 11, 12, 13 für die Single- und die Multiturn-Stufen auf derselben Seite der Leiterplatte 6. Somit können die Abtasteinheiten 10, 21, 22, 23 zur Detektion dieser Maßverkörperungen 9, 11, 12, 13 allesamt auf der den Maßverkörperungen zugewandten Seite der Leiterplatte 6 angeordnet sein. Dies ist insbesondere dann von Vorteil, wenn die Abtasteinheiten in ein- und demselben Verfahren etwa als Chip-on-Board (CoB) mit der Leiterplatte 6 mittels Drahtbonden kontaktiert werden. Weitere elektronische Bauteile sind etwa als SMD-Bauteile (SMD: *surface mounted device)* auf der Leiterplatte 6 angeordnet.

Darüber hinaus sind weitere kompakte Bauformen möglich, wobei die Getriebestufen für die Multiturn-Einheit teilweise oder vollständig im Umfangsbereich der Codescheibe 9 der Single-Stufe liegen. Die Abtasteinheiten 10, 21, 22, 23 zur Detektion der Maßverkörperung 9 der Single-Stufe und der Maßverkörperungen 11, 12, 13 der Multiturn-Getriebestufen können dabei optional auf einer einzigen Leiterplatte 6 liegen.

In einer weiteren Bauform-Variante liegt die Leiterplatte 6 zwischen der ersten Maßverkörperung 9 zur Erfassung der Winkellage der Eingangswelle 2 und der Multiturn-Einheit 5. Auch in diesem Falle können die Abtast-Einheiten zur Detektion der Maßverkörperungen 9, 11, 12, 13 auf einer Leiterplatte 6 angeordnet sein.

Im in den **Figuren 1** und **4** dargestellten Ausführungsbeispiel ist die erste Maßverkörperung 9 durch eine transmissive Codescheibe realisiert. Es ist jedoch auch die erfindungsgemäße Verwendung einer reflektiven Codescheibe möglich. In diesem Fall ist der Lichtsender 7 auf derselben Seite wie die Abtasteinheit 10 positioniert. Vorzugsweise werden der Lichtsender 7 und die Abtasteinheit 10 auf einer gemeinsamen Leiterplatte 6 angeordnet.

Im Falle der Detektion einer optischen Codescheibe 9 besteht die Abtasteinheit 10 aus entsprechend der Codierung auf der Maßverkörperung 9 strukturierten photoempfindlichen halbleitenden Schichten, welche ein oder mehrere elektrische analoge oder digitale Positionssignale generieren.

Die Abtasteinheiten 21, 22, 23 zur Detektion der magnetischen Multiturn-Maßverkörperungen 11, 12, 13 bestehen vorzugsweise aus mehreren in einem Halbleitersubstrat integrierten Magnetsensoren, wie etwa Hall- oder magnetoresistiven (MR) Sensoren. Die Auflösung der Winkellage der als Maßverkörperungen dienenden Positionsmagnete 11, 12, 13, welche die den Abtasteinheiten 21, 22, 23 jeweils nachgeschalteten Auswerteschaltungen erzeugen, beträgt mindestens n Bit, wobei 2ⁿ größer ist als der Untersetzungsfaktor zwischen je zwei die Positionsmagnete 11, 12, 13 tragenden Multitum-Zahnrädern 31, 32, 33.

### Bezugszeichenliste

- 1: Drehgeber
- 2: Eingangswelle
- 3: Gehäuse
- 4: Lagerung
- 5: Multiturn-Getriebeeinheit
- 6: Leiterplatte
- 7: Sender
- 8: Kollimatorlinse
- 9: Codescheibe / Maßverkörperung
- 10, 21, 22, 23: Abtasteinheiten
- 11, 12, 13: Magnete / Maßverkörperungen
- 31, 32, 33: Codezahnräder
- 34, 35: Zwischenzahnräder
- 40: Eingangszahnrad
- 41: Eingangszahnrad der Multiturn-Einheit 5
- 411: Rad des Zahnrades 41
- 411: Trieb des Zahnrades 41
- D₄₀, D₄₁: Drehachsen der Zahnräder 40, 41
- Z₄₀, Z₄₁: Zähne des Zahnrades 40 und des Rades 411 des Zahnrades 41

## Patentansprüche

1. Multiturn-Winkelmessgerät (1) mit einer ersten Maßverkörperung (9), welche mit der Eingangswelle (2) verdrehfest verbunden ist und die mittels einer ersten Abtasteinheit (10) zur Bestimmung der Winkellage der Eingangswelle (2) abgetastet wird, und mit weiteren Maßverkörperungen (11, 12, 13) zur Messung der Anzahl der Umdrehungen der Eingangswelle (2), wobei jede Maßverkörperung (11, 12, 13) mittels eines Untersetzungsgetriebes zur jeweils vorgeschalteten Maßverkörperung (9, 11, 12) untersetzt wird und parallel zueinander angeordnet sind und zur Abtastung jeder Maßverkörperung (11, 12, 13) jeweils eine Abtasteinrichtung (21, 22, 23) auf einer Leiterplatte (6) angeordnet ist, **dadurch gekennzeichnet, dass** ein mit der Eingangswelle (2) verbundene Eingangszahnrad (40) sowie ein erstes Getriebezahnrad (41) des Untersetzungsgetriebes nicht zueinander parallele Drehachsen (D₄₀, D₄₁) aufweisen und dass die Zahnflanken der Zähne (Z₄₀, Z₄₁) des Zahnrades (40) und des Rades (411) des Zahnrades (41) nicht parallel zur Drehachse (D₄₀, D₄₁) des jeweiligen Zahnrades (40, 41) verlaufen und dass die Anzahl der Zähne (Z₄₀) des Eingangszahnrades (40) kleiner ist als die Anzahl der Zähne (Z₄₁) des Rades (411) des ersten Getriebezahnrades (41) und dass die folgenden Getriebezahnräder wieder parallel zur Eingangswelle angeordnet sind und der Trieb (412) des ersten Getrieberades (41) sowie das Rad des zweiten Getriebezahnrades (31) Schraubräder sind.

2. Multiturn-Winkelmessgerät gemäß Patentanspruch 1, **dadurch gekennzeichnet, dass** das mit der Eingangswelle (2) verbundene Zahnrad (40) und das Rad (411) des ersten Getriebezahnrades (41) Schraubräder sind.

3. Multiturn-Winkelmessgerät nach einem der vorangehenden Patentansprüche, **dadurch gekennzeichnet, dass** die Abtasteinheit (10) der ersten Maßverkörperung (9) und die Abtasteinheiten (21, 22, 23) der weiteren Maßverkörperungen (11, 12, 13) auf einer einzigen Leiterplatte (6) angeordnet sind.

4. Multiturn-Winkelmessgerät nach einem der vorangehenden Patentansprüche, **dadurch gekennzeichnet, dass** die weiteren Maßverkörperungen (11, 12, 13) zentrisch getragen werden von Zahnrädern (31, 32, 33), die parallel zur Eingangswelle (2) verlaufende Drehachsen aufweisen und zwischen denen weitere Zwischenzahnräder (34, 35) angeordnet sind, und dass die Zahnräder (31, 32, 33, 34, 35, 41) auf einer einteiligen Multiturn-Einheit (5) angeordnet sind.

5. Multiturn-Winkelmessgerät nach einem der vorangehenden Patentansprüche, **dadurch gekennzeichnet, dass** die weiteren Maßverkörperungen (11, 12, 13) diametral magnetisierte Permanentmagnete sind.

6. Multiturn-Winkelmessgerät nach einem der vorangehenden Patentansprüche, **dadurch gekennzeichnet, dass** die erste Maßverkörperung (9) eine transmissive Moire-Codescheibe ist, welche durch einen Sender (7) beleuchtet wird und welche detektiert wird vermittels einer photoelektrischen Abtasteinheit (10).

7. Multiturn-Winkelmessgerät nach einem der vorangehenden Patentansprüche 1 bis 6, **dadurch gekennzeichnet, dass** die erste Maßverkörperung (9) aus einem oder mehreren Magneten besteht, die sektoriell magnetisiert sind und von einem oder mehreren Magnetsensoren detektiert werden.

## Claims

1. Multi-turn angle measuring device (1) with a first dimensional standard (9), which is non-rotatably connected to an input shaft (2) and which is sampled with a first scanning unit (10) to determine an angular position of the input shaft (2), and with additional dimensional standards (11, 12, 13) that measure the number of turns of the input shaft (2), each additional dimensional standard (11, 12, 13) being reduced in speed by means of a reduction gear from the preceding dimensional standard (9, 11, 12) arranged in parallel to each other, and a scanning device (21, 22, 23) for the sampling of each dimensional standard (11, 12, 13) arranged on a circuit board (6), **characterized in that** an input gear (40) connected to the input shaft (2) and a first transmission gear (41) of the reduction gear have axes of rotation (D₄₀, D₄₁) that are not parallel to each other, flanks of teeth (Z₄₀, Z₄₁) of the input gear (40) and of a wheel (411) of the first transmission gear (41) are not parallel to the axis of input rotation (D₄₀, D₄₁) of the respective gear (40, 41), a number of teeth (Z40) of the input gear (40) is smaller than a number of teeth (Z₄₁) of the wheel (411) of the first transmission gear (41), the following transmission gears are arranged parallel to the input shaft, and a pinion (412) of the first transmission gear (41) and the wheel of a second transmission gear (31) have helical gears.

2. Multi-turn angle measuring device according to claim 1, **characterized in that** the input gear (40) connected to the input shaft (2) and the wheel (411) of the first transmission gear (41) have helical gears.

3. Multi-turn angle measuring device according to one of the preceding claims, **characterized in that** the scanning unit (10) for the first dimensional standard (9) and the scanning units (21, 22, 23) of the additional dimensional standards (11, 12, 13) are arranged on a single circuit board (6).

4. Multi-turn angle measuring device according to one of the preceding claims, **characterized in that** the additional dimensional standards (11, 12, 13) are centrally carried by main gears (31,32,33) that have axes of rotation parallel to the input shaft (2) and driven via additional intermediate gears (34, 35) are arranged between the main gears, and wherein the gears (31, 32, 33, 34, 35, 41) are arranged on a single-piece multi-turn unit (5).

5. Multi-turn angle measuring device according to one of the preceding claims, **characterized in that** the other dimensional standards (11, 12, 13) comprise diametrically magnetized permanent magnets.

6. Multi-turn angle measuring device according to one of the preceding claims, **characterized in that** the first dimensional standard (9) is a transmissive Moiré code disk, which is illuminated by a transmitter (7) and which is detected by a photoelectric scanning unit (10).

7. Multi-turn angle measuring device according to one of the preceding claims 1 to 6, **characterized in that** the first dimensional standard (9) comprises one or more magnets, which are magnetized in sectors and detected by one or more magnetic sensors.

## Revendications

1. Appareil de mesure angulaire multitour (1) comprenant une première mesure matérialisée (9), qui est reliée de façon résistante à la torsion à l'arbre d'entrée (2) et qui est balayée au moyen d'une première unité de balayage (10) pour la détermination de la position angulaire de l'arbre d'entrée (2), et d'autres mesures matérialisées (11, 12, 13) pour la mesure du nombre de rotations de l'arbre d'entrée (2), chaque mesure matérialisée (11, 12, 13) étant démultipliée au moyen d'un engrenage réducteur pour la mesure matérialisée (9, 11, 12) respectivement branchée en amont et ces mesures étant disposées parallèlement entre elles et à chaque fois un dispositif de balayage (21, 22, 23) étant disposé sur une carte imprimée (6) pour le balayage de chaque mesure matérialisée (11, 12, 13), **caractérisé en ce qu'**une roue dentée d'entrée (40) reliée à l'arbre d'entrée (2) ainsi qu'une première roue dentée d'engrenage (41) de l'engrenage réducteur présentent des axes de rotation (D₄₀, D₄₁) non parallèles entre eux et **en ce que** les flancs de dent des dents (Z₄₀, Z₄₁) de la roue dentée (40) et de la roue (411) de la roue dentée (41) ne sont pas parallèles à l'axe de rotation (D₄₀, D₄₁), de la roue dentée (40, 41) concernée et **en ce que** le nombre de dents (Z₄₀) de la roue dentée d'entrée (40) est inférieur au nombre de dents (Z₄₁) de la roue (411) de la première roue dentée d'engrenage (41) et **en ce que** les roues dentées d'engrenage suivantes sont disposées à nouveau parallèlement à l'arbre d'entrée et la commande (412) de la première roue d'engrenage (41) ainsi que la roue de la seconde roue dentée d'engrenage (31) sont des roues à dents hélicoïdales.

2. Appareil de mesure angulaire multitour selon la revendication 1, **caractérisé en ce que** la roue dentée (40) reliée à l'arbre d'entrée (2) et la roue (411) de la première roue dentée d'engrenage (41) sont des roues à dents hélicoïdales.

3. Appareil de mesure angulaire multitour selon l'une des revendications précédentes, **caractérisé en ce que** l'unité de balayage (10) de la première mesure matérialisée (9) et les unités de balayage (21, 22, 23) des autres mesures matérialisées (11, 12, 13) sont disposées sur une seule carte imprimée (6).

4. Appareil de mesure angulaire multitour selon l'une des revendications précédentes, **caractérisé en ce que** les autres mesures matérialisées (11, 12, 13) sont portées de façon centrée par des roues dentées (31, 32, 33), qui présentent des axes de rotation parallèles à l'arbre d'entrée (2) et entre lesquelles sont disposées d'autres roues dentées intermédiaires (34, 35), et **en ce que** les roues dentées (31, 32, 33, 34, 35, 41) sont disposées sur une unité multitour (5) d'une seule pièce.

5. Appareil de mesure angulaire multitour selon l'une des revendications précédentes, **caractérisé en ce que** les autres mesures matérialisées (11, 12, 13) sont des aimants permanents diamétralement magnétisés.

6. Appareil de mesure angulaire multitour selon l'une des revendications précédentes, **caractérisé en ce que** la première mesure matérialisée (9) est un disque à code de Moiré transmissif, qui est éclairé par un émetteur (7) et qui est détecté au moyen d'une unité de balayage (10) photoélectrique.

7. Appareil de mesure angulaire multitour selon l'une des revendications précédentes 1 à 6, **caractérisé en ce que** la première mesure matérialisée (9) comprend un ou plusieurs aimants qui sont magnétisés de façon sectorielle et sont détectés par un ou plusieurs capteurs magnétiques.
